# EUROPÄISCHE PATENTSCHRIFT

(11) **EP 1 350 612 B1**
(45) Veröffentlichungstag und Bekanntmachung des Hinweises auf die Patenterteilung: **17.11.2004**
(21) Anmeldenummer: 03004622.1
(22) Anmeldetag: 03.03.2003
(51) Int. Cl.: B29C 49/42, B29C 31/08, B29C 49/36

(54) **Vorrichtung zur Handhabung von Vorformling / Behältern mittel separat ansteuerbaren Armen, die auf einer Drehscheibe radial befestigt sind**
Apparatus for handling of preforms with separatly controlable arms mounted radially on a turning disk
Appareil pour le transport de préformes / paraisons avec des pinces controlables séparement et fixées radialement sur une disque tournante / rotative

(30) Priorität: 04.04.2002 DE 10214787
(43) Veröffentlichungstag der Anmeldung: 08.10.2003
(73) Patentinhaber: SIG Corpoplast GmbH & Co. KG, 22145 Hamburg (DE)
(72) Erfinder: Vogel, Klaus, 22885 Barsbüttel (DE); Lewin, Frank, 22889 Tangstedt (DE); Klatt, Dieter, 22147 Hamburg (DE)
(74) Vertreter: Klickow, Hans-Henning, Dr.-Ing.

(56) Entgegenhaltungen:
- DE-A- 19 737 697
- US-A- 4 479 772
- US-A- 5 683 729

## Beschreibung

Die Erfindung betrifft eine Vorrichtung zur Handhabung von Werkstücken, die als ein rotationsfähiges Kopplungsrad ausgebildet ist, das mindestens einen relativ zu einer Mittellinie des Kopplungsrades im wesentlichen radial angeordneten Tragarm aufweist, der mit einem Halteelement für die Werkstücke versehen ist und bei der das Halteelement in Richtung einer Längsachse des Tragarmes relativ zur Mittellinie des Kopplungsrades positionsveränderlich angeordnet ist, sowie bei der das Halteelement für die Vorgabe einer Positionierung relativ zur Mittellinie des Kopplungsrades mit einer Steuerung gekoppelt ist.

Derartige Vorrichtungen werden insbesondere bei der Herstellung von blasgeformten Behältern eingesetzt, um eine Übergabe von geblasenen Behältern von einer Arbeitsstation zu einer anderen Arbeitsstation mit hoher Übergabegeschwindigkeit durchführen zu können. Beispielsweise ist ein derartiges Kopplungsrad zwischen einem rotierenden Blasrad und einer Ausgabestrecke angeordnet.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Kopplungsrades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Übergabe von Vorformlingen und Behältern werden typischerweise kurvengesteuerte Übergaberäder verwendet, bei denen zum Teil die verwendeten Tragarme relativ zu einer Tragstruktur des Kopplungsrades verschwenkbar angeordnet sind. Durch die Verschwenkbarkeit der Übergabearme kann eine Abstandsveränderung der zu übergebenden Vorformlinge oder Behälter relativ zueinander vorgegeben werden.

Derartige verschwenkbare Tragarme werden beispielsweise in der DE-OS 38 47 118 beschrieben. Die hier erläuterten Tragarme sind darüber hinaus auch teleskopierbar ausgebildet. Eine weitere Konstruktion zu teleskopierbaren Tragarmen wird in der DE-OS 196 54 350 erläutert. Den bekannten Konstruktionen ist gemeinsam, daß sowohl eine Verschwenkung der Tragarme relativ zum Grundkörper des Übergaberades als auch eine Teleskopierung definiert von Kurvensteuerungen vorgegeben ist, so daß während des gesamten Produktionsablaufes die zu übergebenden Vorformlinge oder Flaschen relativ zueinander exakt identische Bewegungsbahnen durchlaufen.

Aufgabe der vorliegenden Erfindung ist es, eine Vorrichtung der einleitend genannten Art derart zu konstruieren, daß bei der Durchführung einer Übergabe der Werkstücke eine Steuerungsmöglichkeit zur Beeinflussung des Übergabevorganges bereitgestellt wird.

Diese Aufgabe wird erfindungsgemäß dadurch gelöst, daß die Steuerung die Positionierung des Halteelementes mindestens zeitweise unabhängig von einer jeweiligen Rotationspositionierung des Kopplungsrades vorgibt.

Durch die Positionsvorgabe für die Halteelemente unabhängig von einer jeweiligen Rotationspositionierung des Kopplungsrades ist es somit möglich, für die Halteelemente eine relativ zum Mittelpunkt ausgefahrene Positionierung für einen in üblicher weise durchzuführenden Übergabevorgang vorzugeben und durch ein Zurückziehen des Halteelementes und damit durch eine Abstandsverringerung zwischen dem Halteelement und dem Mittelpunkt des Übergaberades eine Übergabe der Werkstücke an eine nachfolgende Verarbeitungsstation zu unterbinden. Nach Auftreten eines auslösenden Ereignisses kann die Abstandsverminderung der Halteelemente relativ zum Mittelpunkt des Übergaberades vorgegeben und hierdurch unabhängig von einem für den Normalablauf einer Übergabe vorgesehenen Bewegungsablauf gezielt in den Übergabevorgang eingegriffen werden.

Eine besonders robuste und preiswerte Steuerung wird dadurch bereitgestellt, daß die Steuerung mindestens bereichsweise pneumatisch ausgebildet ist.

Ebenfalls ist daran gedacht, daß die Steuerung mindestens bereichsweise elektrisch ausgebildet ist. Es kann beispielsweise ein Einsatz von Servoantrieben oder Linearmotoren erfolgen.

Eine Positionierung der Halteelemente gemeinsam von lediglich einem Stellelement kann dadurch erreicht werden, daß die Steuerung mindestens bereichsweise als Kurvenrolle mit einem positionierbaren Kurvensegment ausgebildet ist.

Ebenfalls ist vorgesehen, daß die Steuerung mindestens bereichsweise elektromagnetisch ausgebildet ist.

Eine automatische Positionierung der Halteelemente in einem Grundzustand ohne Vorgabe von Stellkräften kann dadurch erreicht werden, daß das Halteelement in einer Grundpositionierung über eine Federvorspannung positioniert ist und daß durch die Steuerung eine Veränderung dieser Grundpositionierung vorgebbar ist.

Eine zuverlässige Führung wird dadurch bereitgestellt, daß das Halteelement relativ zum Tragarm von mindestens einem Führungselement gehaltert ist.

Eine präzise Führung wird auch dadurch unterstützt, daß zwei stangenartige Führungselemente verwendet sind.

Zur Vereinfachung eines Steuerungskonzeptes trägt es bei, daß alle Halteelemente im wesentlichen gleichzeitig von der Steuerung positionierbar sind.

Eine typische Anwendung wird dadurch definiert, daß die Halteelemente als Behälter ausgebildete Werkstücke mit Mündungsbereichen in lotrechter Richtung nach oben positionieren.

Eine exakte Werkstückübergabe wird dadurch unterstützt, daß die Halteelemente zangenartig ausgebildet sind.

Eine mechanisch sehr einfache Realisierung zur Unterstützung einer Auskopplung von Werkstücken wird dadurch bereitgestellt, daß die Halteelemente als ein Halteprofil ausgebildet sind, das mit mindestens einem die Werkstücke im Halteprofil positionierenden Führungselement zusammenwirkt.

Eine typische Anwendung besteht darin, daß das Kopplungsrad als Verbindungselement eines Blasmoduls zur Behälterformung und einer Füllmaschine zur Behälterfüllung angeordnet ist.

Zur Unterstützung von Abstandsänderungen der zu übergebenden Werkstücke relativ zueinander wird vorgeschlagen, daß die Tragarme relativ zu einem Grundelement des Kopplungsrades verschwenkbar angeordnet sind.

Eine Bewegungsdurchführung mit sehr hoher Reproduziergenauigkeit wird dadurch erreicht, daß die Tragarme relativ zum Grundelement von einer Kurvensteuerung positionierbar sind.

Eine Entkopplungsfunktion wird dadurch unterstützt, daß in lotrechter Richtung unterhalb des Kopplungsrades eine Transporteinrichtung für ausgekoppelte Werkstücke angeordnet ist.

Eine weitere typische Anwendung besteht darin, daß das Kopplungsrad zu einem Transport von Werkstücken in Form von Behältern aus einem thermoplastischen Material ausgebildet ist.

Darüber hinaus ist auch daran gedacht, daß das Kopplungsrad zu einem Transport von Werkstücken in Form von vorformlingen für eine nachfolgende blastechnische Behälterformung ausgebildet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Prinzipdarstellung einer Blasmaschine und einer Füllmaschine, die durch rotierende Übergaberäder miteinander zu einer geblockten Gesamtanlage gekoppelt sind,
- Fig. 6: einen Vertikalschnitt durch ein Übergaberad mit Halteelementen, die an teleskopierbaren Tragarmen angeordnet sind,
- Fig. 7: eine Prinzipdarstellung einer Draufsicht auf das Übergaberad gemäß Fig. 6 in einer stark vereinfachten Darstellung,
- Fig. 8: eine teilweise Darstellung des Kopplungsrades gemäß Fig. 7 zur Verdeutlichung einer Verschwenkung der Tragarme relativ zu einem Grundelement des Übergaberades bzw. relativ zueinander,
- Fig. 9: eine Draufsicht auf ein gegenüber der Ausführungsform in Fig. 6 modifiziertes Kopplungsrad,
- Fig. 10: einen Querschnitt gemäß Schnittlinie X-X in Fig. 9 und
- Fig. 11: einen Horizontalschnitt gemäß Schnittlinie XI-XI in Fig. 10.

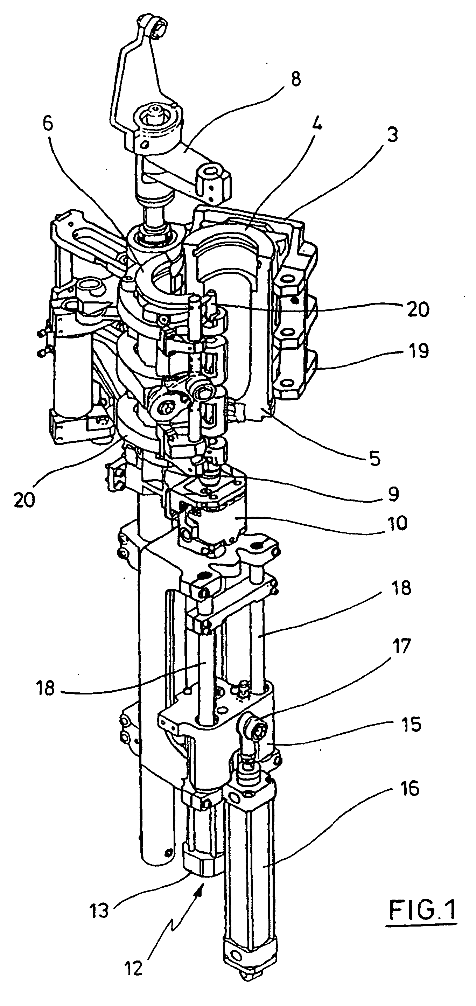

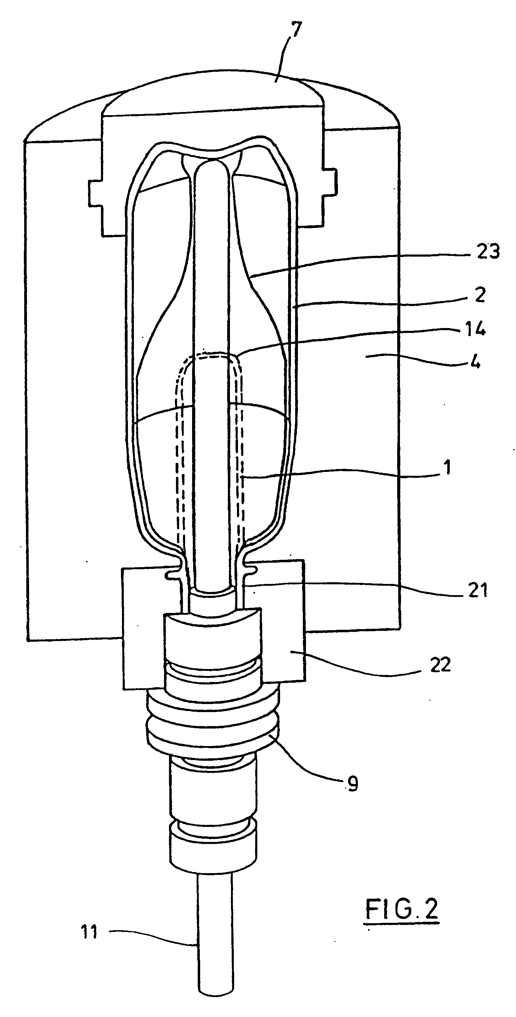

Eine Verwendung der Vorrichtung zur Handhabung von Werkstücken kann beispielsweise zur Übergabe von geblasenen Behältern (2) bei einer Vorrichtung zur Blasformung oder zur Kopplung einer derartigen Blasmaschine mit einer Füllmaschine erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen. Fig. 2 zeigt zusätzlich zum geblasenen Behälter (2) auch gestrichelt eingezeichnet den Vorformling (1) und schematisch eine sich entwickelnde Behälterblase (23).

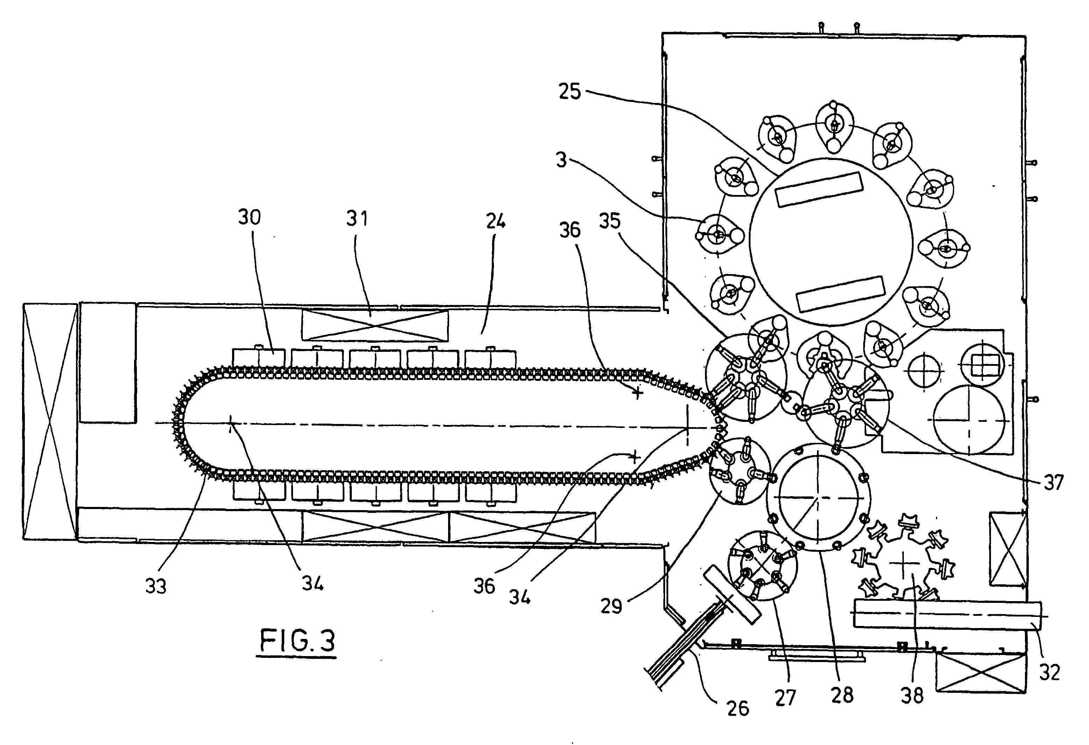

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

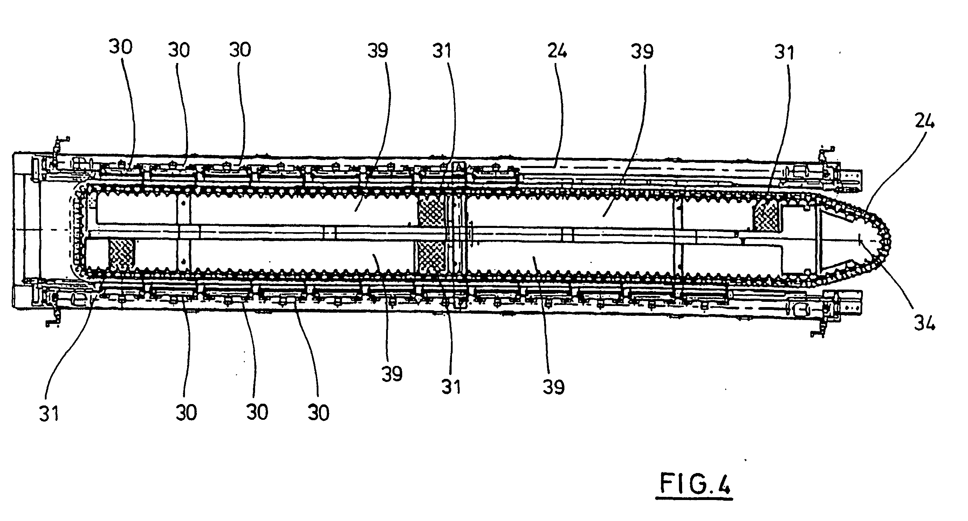

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

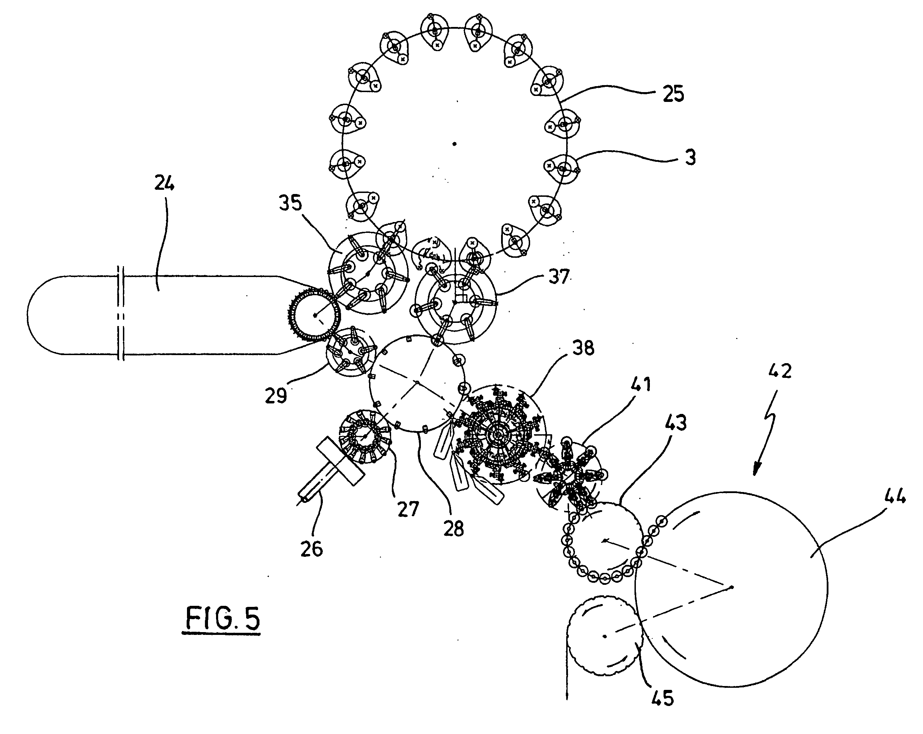

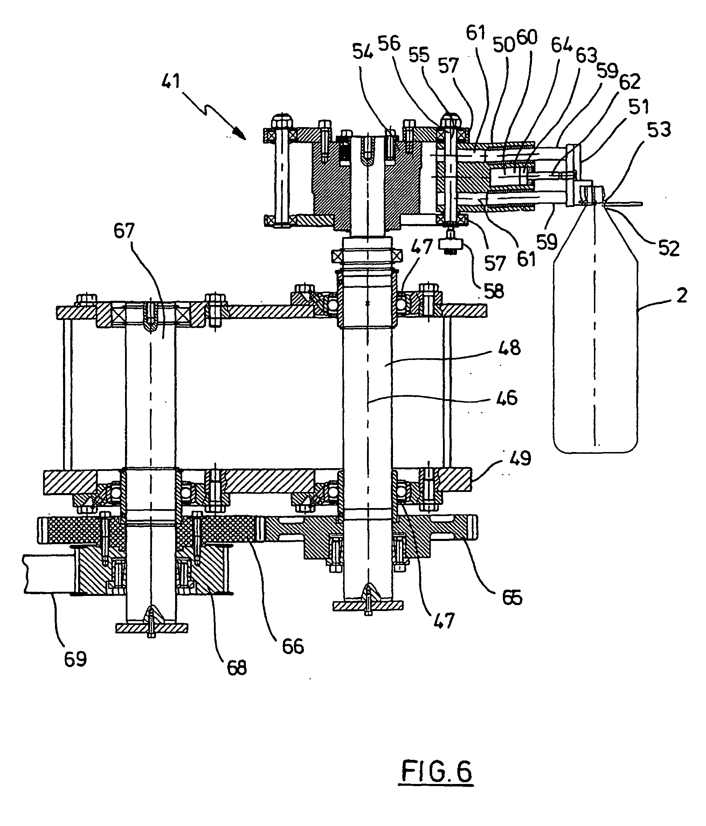

Fig. 5 zeigt eine Prinzipdarstellung eines Blasmoduls mit Heizstrecke (24) und Blasrad (25), das über ein Ausgaberad (38) und ein Kopplungsrad (41) mit einem Füllmaschinenmodul (42) verbunden ist. Das Füllmaschinenmodul (42) weist ein rotierendes Eingaberad (43), ein Füllrad (44) sowie ein rotierendes Ausgaberad (45) auf. Typischerweise werden zu befüllende Behälter (2) im Bereich des Füllmaschinenmoduls (42) mit ihren Mündungen nach oben orientiert gefördert und eine Halterung der Behälter (2) erfolgt vorzugsweise mit zangenartigen Tragelementen im Bereich eines in Fig. 6 dargestellten Behälterhalses (52), typischerweise unterhalb eines Stützringes (53).

Fig. 6 zeigt das relativ zu einer Mittellinie (46) rotationsfähig gelagerte Kopplungsrad (41) für geblasene Behälter (2). Die rotationsfähige Lagerung kann derart realisiert sein, daß das Kopplungsrad (41) über Lager (47) und eine Welle (48) in einem Sockel (49) geführt ist.

Außenseitig am Kopplungsrad (41) sind Tragarme (50) angeordnet, die mit Halteelementen (51) für die Behälter (2) versehen sind. Beim dargestellten Ausführungsbeispiel beaufschlagen die Haltelemente (51) den Behälter (2) im Bereich des Behälterhalses (52) unterhalb des Stützringes (53).

Der Tragarm (50) ist relativ zu einem Grundelement (54) des Kopplungsrades (41) beweglich geführt. Der Tragarm (50) ist dabei um eine Drehachse (55) herum verschwenkbar angeordnet. Die Drehachse (55) verläuft im Bereich einer welle (56), die von Lagern (57) im Grundelement (54) geführt ist und sich im Wesentlichen in vertikaler Richtung erstreckt. Der Tragarm (50) ist mit einer Kurvenrolle (58) gekoppelt, um Schwenkbewegungen um die Drehachse (55) herum vorzugeben.

Das Halteelement (51) ist über Führungselemente (59) in Richtung einer Längsachse (60) des Tragarmes (50) positionsveränderlich angeordnet. Beim dargestellten Ausführungsbeispiel sind zwei stangenartige Führungselemente (59) vorgesehen, die in Führungsausnehmungen (61) des Tragarmes (50) aufgenommen sind.

Das Halteelement (51) ist darüber hinaus über ein Stellelement (62) mit dem Tragarm (50) verbunden, das eine jeweilige Positionierung des Halteelementes (51) relativ zum Tragarm (50) vorgibt. Beim dargestellten Ausführungsbeispiel ist das Stellelement (62) als ein Kolben (63) ausgebildet, der in einem Zylinder (64) geführt ist. Insbesondere ist daran gedacht, den Kolben (63) pneumatisch zu positionieren.

Bei dem in Fig. 6 dargestellten Ausführungsbeispiel weist die Welle (56) im Bereich ihrer dem Kopplungsrad (41) abgewandten Ausdehnung ein Antriebszahnrad (65) auf, das in ein Zwischenzahnrad (66) eingreift. Das Zwischenzahnrad (66) wird von einer Nebenwelle (67) getragen, die gleichfalls wie die Welle (48) rotationsfähig vom Sockel (49) gehaltert ist. Die Nebenwelle (67) trägt darüber hinaus ein Antriebsrad (68), das von einem Antriebsmittel (69) beaufschlagt ist. Das Antriebsmittel (69) kann beispielsweise als ein Zahnriemen ausgebildet sein.

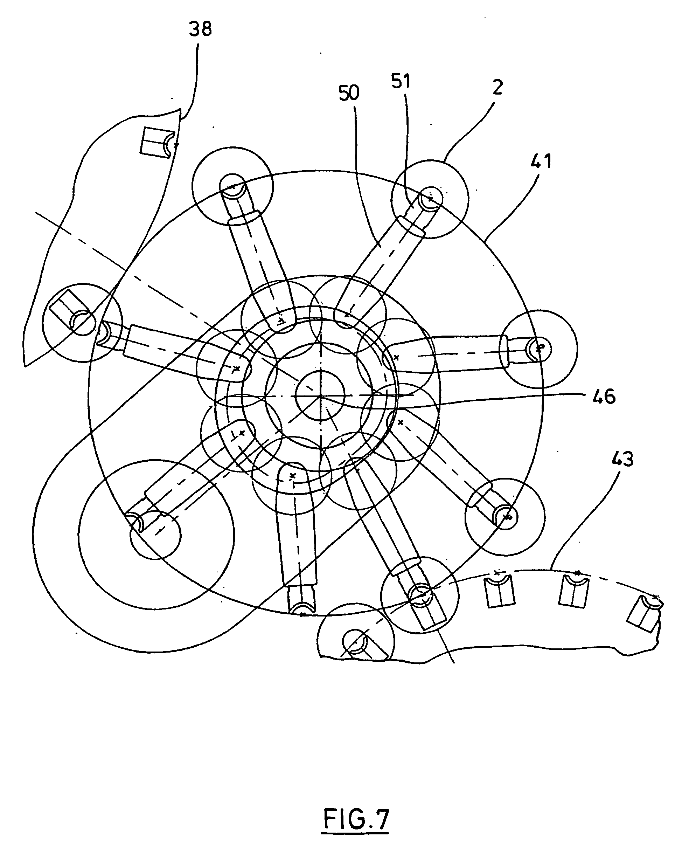

Fig. 7 zeigt in einer schematischen Draufsicht das Kopplungsrad (41) in einer Anordnung zwischen einem lediglich teilweise dargestellten Ausgaberad (38) sowie einem ebenfalls nur teilweise dargestellten Eingaberad (43). Es ist zu erkennen, daß bei dieser Ausführungsform acht Tragarme (50) vorgesehen sind, die jeweils ein Halteelement (51) positionieren. Die Halteelemente (51) übernehmen jeweils einen Behälter (2) vom Ausgaberad (38) und übergeben den Behälter (2) nach Durchführung einer rotierenden Übergabebewegung an das Eingaberad (43).

Es ist insbesondere zu erkennen, daß ein Abstand der Behälter (2) im Bereich des Ausgaberades (38) größer als im Bereich des Eingaberades (43) gewählt ist. Bei der Durchführung der Übergabebewegung durch das Kopplungsrad (41) kann aufgrund der relativ zum Grundelement (54) verschwenkbaren Anordnung der Tragarme (50) auch eine Abstandsänderung der Behälter (2) relativ zueinander realisiert werden. Die Halteelemente (51) befinden sich bei der in Fig. 7 dargestellten Arbeitspositionierung in einer maximalen Entfernung zur Mittellinie (46) des Kopplungsrades (41), so daß die vorgesehenen Übergabevorgänge durchgeführt werden können.

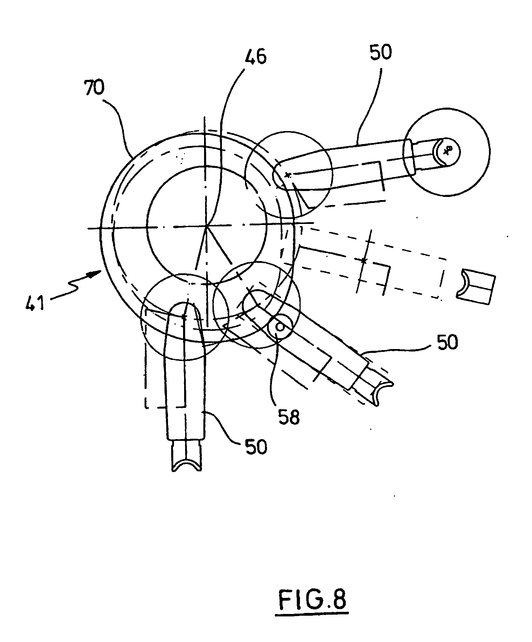

Fig. 8 veranschaulicht nochmals die Durchführung einer Schwenkbewegung der Tragarme (50). Die Schwenkbewegung wird dadurch hervorgerufen, daß die Kurvenrollen (58) bei einer Rotation des Kopplungsrades (41) entlang einer Kurvenbahn (70) bewegt werden. Die Kurvenbahn (70) weist entlang eines Umlaufs unterschiedliche Abstände zur Mittellinie (46) auf. Die Kombination des Zusammenwirkens der Führung der Kurvenrolle (58) mit der schwenkfähigen Lagerung der Tragarme (50) verursacht hierbei die Schwenkbewegungen der Tragarme (50) relativ zum Grundelement (54).

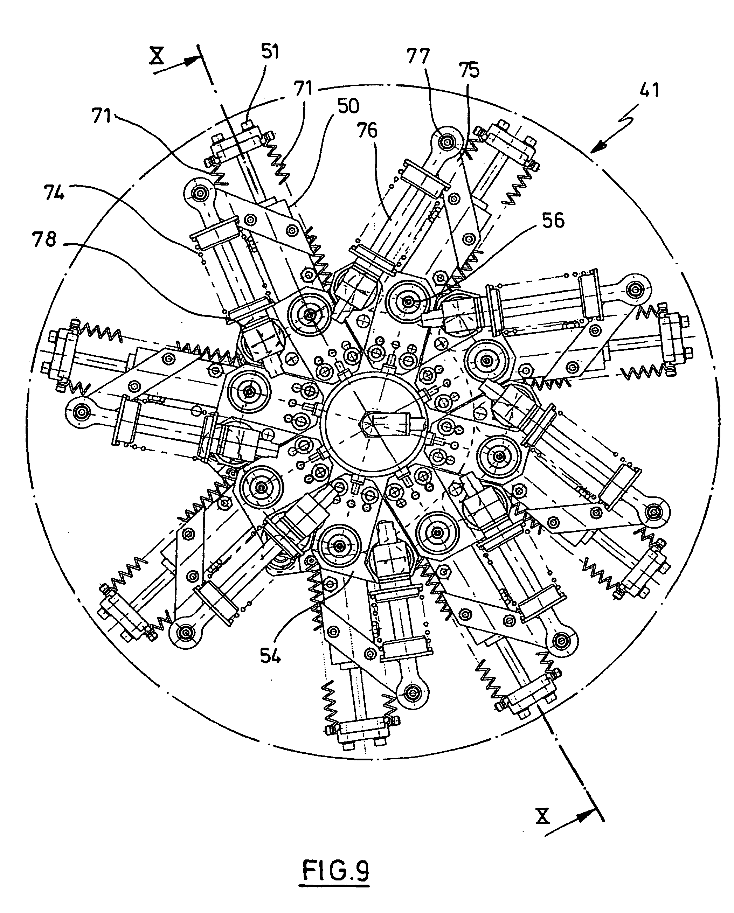

Bei der Ausführungsform gemäß Fig. 9 sind die Halteelemente (51) über Federn (71) relativ zum jeweils zugeordneten Tragarm (50) verspannt. Bei dieser Ausführungsform sind die Federn (71) als Zugfedern ausgebildet, die die Halteelemente (51) ohne eine Aktivierung der Stellelemente (62) in eine entkoppelnde Grundpositionierung zurückziehen. Die Federn (71) können aber auch als Druckfedern ausgebildet sein. Eine derartige Konstruktion weist den Vorteil auf, daß die Halteelemente (51) ohne Aktivierung des Stellelementes (62) in einer Übergabepositionierung für die Werkstücke angeordnet werden. Nur bei einer aktiven Betätigung des Stellelementes (62) werden die Halteelemente (51) zurückgezogen, so daß kein weiterer Übergabevorgang durchgeführt wird.

Fig. 9 veranschaulicht ebenfalls, daß die Tragarme (50) über Stege (75) jeweils mit einem Andruckhebel (76) gekoppelt sind. Der Andruckhebel (76) ist dabei über ein Schwenklager (77) drehbeweglich mit dem Steg (75) verbunden. Der Andruckhebel (76) ist über eine Feder (74) gegenüber der Lagerbuchse (78) verspannt. Insbesondere ist daran gedacht, als Feder (74) eine Druckfeder zu verwenden. Die Feder (74) erzeugt hierbei eine Andruckkraft, die über den Andruckhebel (76) und den Tragarm (50) auf die Kurvenrolle (58) übertragen wird. Hierdurch wird die Kurvenrolle (58) gegen die Kurvenbahn (70) gedrückt. Eine derartige Konstruktion weist den Vorteil auf, daß für die Kurvenrollen (58) lediglich eine einseitige Führung durch die Kurvenbahn (70) realisiert zu werden braucht. Bei einem Auftreten von unvorhergesehenen Kräften kann hierdurch die Kurvenrolle (58) von der Kurvenbahn (70) abheben, so daß mechanische Schäden vermieden werden.

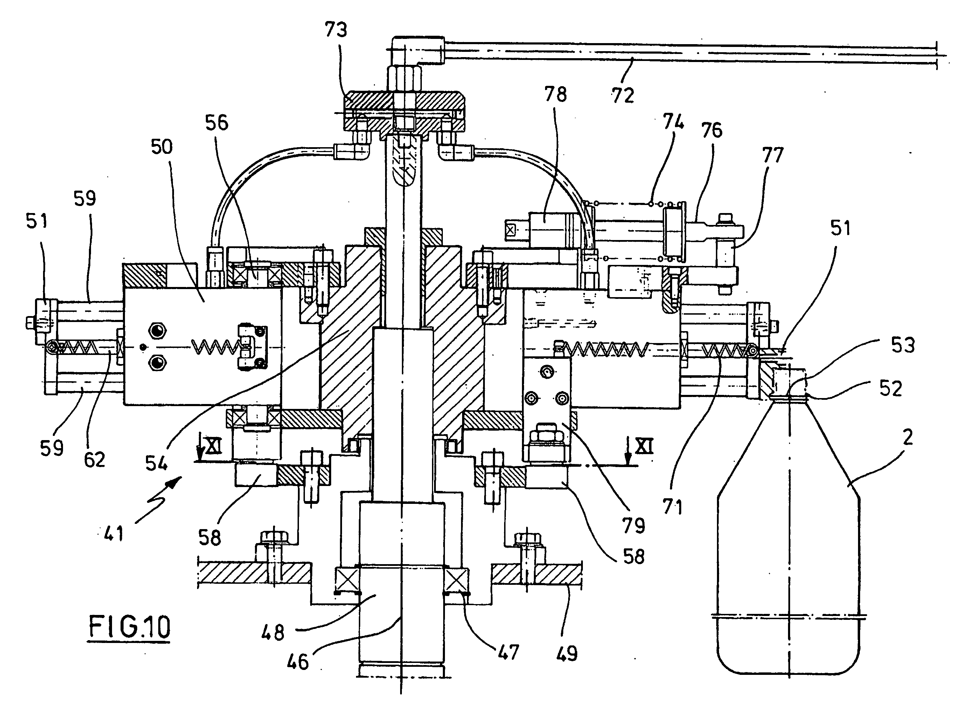

Aus der Vertikalschnittdarstellung in Fig. 10 ist erkennbar, daß beim dargestellten Ausführungsbeispiel für die Zylinder (64) eine gemeinsame Druckmittelzuführung (72) sowie ein gemeinsamer Drehverteiler (73) verwendet sind. Ebenfalls ist aus Fig. 9 und Fig. 10 die Verwendung der Federn (74) zur Bereitstellung einer exakt definierten Positionierung durch Bereitstellung einer Vorspannung zu erkennen. Die Kurvenrollen (54) sind über seitliche Tragelemente (79) mit den Tragarmen (50) verbunden. Eine bezüglich der Mittellinie (46) erfolgende Abstandsveränderung der Kurvenrolle (54) durch eine Bewegung entlang der Kurvenbahn (70) wird hierdurch in eine Schwenkbewegung des Tragarmes (50) um die Drehachse (55) herum transformiert.

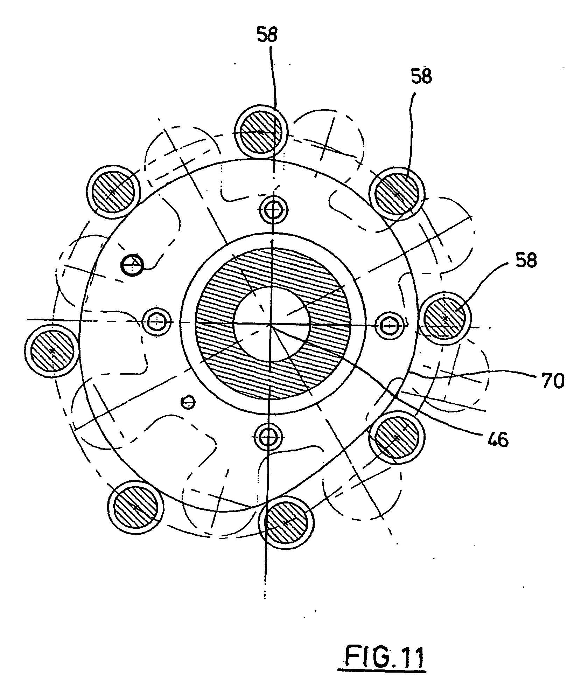

Fig. 11 zeigt die Anlage der Kurvenrollen (58) an der Kurvenbahn (70). Die Anlage wird durch die bereits erläuterte Vorspannung gewährleistet. Aufgrund der unterschiedlichen Abstände der Kurvenrollen (58) zur Mittellinie (46) in Abhängigkeit von einer jeweiligen Rotationspositionierung werden die Schwenkbewegungen der Tragarme (50) hervorgerufen.

Ein wesentlicher Vorteil bei einem Einsatz des Kopplungsrades (41) zur Verbindung eines Blasmoduls mit einem Füllmaschinenmodul (42) besteht darin, daß eine kurzfristige Entkopplung dieser Module, die in der Regel mit separaten Antrieben versehen sind, ohne Vorgabe eines Maschinenstillstandes möglich ist. Insbesondere ist es hierdurch möglich, kurzzeitig auftretende Desynchronisierungen zwischen diesen Modulen ohne nennenswerte Produktionsausfälle zu beheben.

## Patentansprüche

1. Vorrichtung zur Handhabung von Werkstücken, die als ein rotationsfähiges Kopplungsrad ausgebildet ist, das mindestens einen relativ zu einem Mittelpunkt des Kopplungsrades im wesentlichen radial angeordneten Tragarm aufweist, der mit einem Halteelement für die Werkstücke versehen ist, und bei der das Halteelement in Richtung einer Längsachse des Tragarmes relativ zum Mittelpunkt des Kopplungsrades positionsveränderlich angeordnet ist sowie bei der das Halteelement für die Vorgabe einer Positionierung relativ zum Mittelpunkt des Kopplungsrades mit einer Steuerung gekoppelt ist, **dadurch gekennzeichnet, daß** die Steuerung die Positionierung des Halteelementes (51) mindestens zeitweise unabhängig von einer jeweiligen Rotationspositionierung des Kopplungsrades (41) vorgibt.

2. Vorrichtung nach Anspruch 1, **dadurch gekennzeichnet, daß** die Steuerung mindestens bereichsweise pneumatisch ausgebildet ist.

3. Vorrichtung nach Anspruch 1, **dadurch gekennzeichnet, daß** die Steuerung mindestens bereichsweise elektrisch ausgebildet ist.

4. Vorrichtung nach Anspruch 1, **dadurch gekennzeichnet, daß** die Steuerung mindestens bereichsweise als Kurvenrolle (58) mit einem positionierbaren Kurvensegment ausgebildet ist.

5. Vorrichtung nach Anspruch 1, **dadurch gekennzeichnet, daß** die Steuerung mindestens bereichsweise elektromagnetisch ausgebildet ist.

6. Vorrichtung nach einem der Ansprüche 1 bis 5, **dadurch gekennzeichnet, daß** das Halteelement (51) in einer Grundpositionierung über eine Federvorspannung positioniert ist und daß durch die Steuerung eine Veränderung dieser Grundpositionierung vorgebbar ist.

7. Vorrichtung nach einem der Ansprüche 1 bis 6, **dadurch gekennzeichnet, daß** das Halteelement (51) relativ zum Tragarm (50) von mindestens einem Führungselement (59) gehaltert ist.

8. Vorrichtung nach Anspruch 7, **dadurch gekennzeichnet, daß** zwei stangenartige Führungselemente (59) verwendet sind.

9. Vorrichtung nach einem der Ansprüche 1 bis 8, **dadurch gekennzeichnet, daß** alle Halteelemente (51) im wesentlichen gleichzeitig von der Steuerung positionierbar sind.

10. Vorrichtung nach einem der Ansprüche 1 bis 9, **dadurch gekennzeichnet, daß** die Halteelemente (51) als Behälter (2) ausgebildete Werkstücke mit Mündungsbereichen in lotrechter Richtung nach oben positionieren.

11. Vorrichtung nach einem der Ansprüche 1 bis 10, **dadurch gekennzeichnet, daß** die Halteelemente (51) zangenartig ausgebildet sind.

12. Vorrichtung nach einem der Ansprüche 1 bis 10, **dadurch gekennzeichnet, daß** die Halteelemente (51) als ein Halteprofil ausgebildet sind, das mit mindestens einem die Werkstücke im Halteprofil positionierenden Führungselement (59) zusammenwirkt.

13. Vorrichtung nach einem der Ansprüche 1 bis 12, **dadurch gekennzeichnet, daß** das Kopplungsrad (41) als Verbindungselement eines Blasmoduls zur Behälterformung und einer Füllmaschine zur Behälterfüllung angeordnet ist.

14. Vorrichtung nach einem der Ansprüche 1 bis 13, **dadurch gekennzeichnet, daß** die Tragarme (50) relativ zu einem Grundelement (54) des Kopplungsrades (41) verschwenkbar angeordnet sind.

15. Vorrichtung nach einem der Ansprüche 1 bis 14, **dadurch gekennzeichnet, daß** die Tragarme (50) relativ zum Grundelement (54) von einer Kurvensteuerung positionierbar sind.

16. Vorrichtung nach einem der Ansprüche 1 bis 15, **dadurch gekennzeichnet, daß** in lotrechter Richtung unterhalb des Kopplungsrades (41) eine Transporteinrichtung für ausgekoppelte Werkstücke angeordnet ist.

17. Vorrichtung nach einem der Ansprüche 1 bis 16, **dadurch gekennzeichnet, daß** das Kopplungsrad (41) zu einem Transport von Werkstücken in Form von Behältern aus einem thermoplastischen Material ausgebildet ist.

18. Vorrichtung nach einem der Ansprüche 1 bis 16, **dadurch gekennzeichnet, daß** das Kopplungsrad (41) zu einem Transport von Werkstücken in Form von Vorformlingen (1) für eine nachfolgende blastechnische Behälterformung ausgebildet ist.

## Claims

1. Apparatus for handling workpieces, comprising a rotatable coupling wheel with at least one carrier arm disposed essentially radially relative to a centre point of the coupling wheel, which is provided with a holding element for the workpieces, which holding element is disposed so that its position relative to the centre point of the coupling wheel can be varied in the direction of the longitudinal axis of the carrier arm and which holding element is coupled with a control system for pre-setting a position relative to the centre point of the coupling wheel, **characterised in that** the control system pre-sets the position of the holding element (51) independently of a respective rotary position of the coupling wheel (41) at least during certain times.

2. Apparatus as claimed in claim 1, **characterised in that** at least certain parts of the control system are pneumatically operated.

3. Apparatus as claimed in claim 1, **characterised in that** at least certain parts of the control system are electrically operated.

4. Apparatus as claimed in claim 1, **characterised in that** at least a certain part of the control system is a cam roller (58) with a cam segment which can be positioned.

5. Apparatus as claimed in claim 1, **characterised in that** at least certain parts of the control system are electro-magnetically operated.

6. Apparatus as claimed in one of claims 1 to 5, **characterised in that** the holding element (51) is positioned in a base position by means of spring biassing and a change in this base position can be pre-set by the control system.

7. Apparatus as claimed in one of claims 1 to 6, **characterised in that** the holding element (51) is retained relative to the carrier arm (50) by at least one guide element (59).

8. Apparatus as claimed in claim 7, **characterised in that** two rod-type guide elements (59) are used.

9. Apparatus as claimed in one of claims 1 to 8, **characterised in that** all the holding elements (51) can be positioned essentially simultaneously by the control system.

10. Apparatus as claimed in one of claims 1 to 9, **characterised in that** the holding elements (51) position workpieces comprising containers (2) with mouth regions at the top when in the vertical direction.

11. Apparatus as claimed in one of claims 1 to 10, **characterised in that** the holding elements (51) are of a clamp-type design.

12. Apparatus as claimed in one of claims 1 to 10, **characterised in that** the holding elements (51) are provided in the form of a holder section which cooperates with at least one guide element (59) positioning the workpieces in the holder section.

13. Apparatus as claimed in one of claims 1 to 12, **characterised in that** the coupling wheel (41) is designed as a connecting element for a blowing module for moulding the containers and for a filling machine for filling the containers.

14. Apparatus as claimed in one of claims 1 to 13, **characterised in that** the carrier arms (50) are mounted so as to be pivotable relative to a base element (54) of the coupling wheel (41).

15. Apparatus as claimed in one of claims 1 to 14, **characterised in that** the carrier arms (50) can be positioned relative to the base element (54) by means of a cam controller.

16. Apparatus as claimed in one of claims 1 to 15, **characterised in that** a conveyor system for uncoupled workpieces is disposed underneath the coupling wheel (41) in the vertical direction.

17. Apparatus as claimed in one of claims 1 to 16, **characterised in that** the coupling wheel (41) is designed to convey workpieces in the form of containers made from a thermoplastic material.

18. Apparatus as claimed in one of claims 1 to 16, **characterised in that** the coupling wheel (41) is designed to convey workpieces in the form of preforms (1) from which containers are subsequently moulded by a blow-moulding technique.

## Revendications

1. Dispositif de manutention de pièces qui, réalisé sous la forme d'une roue de liaison susceptible de tourner, présente au moins un bras de support qui est disposé dans le sens radial par rapport à un point central de ladite roue de liaison et est pourvu d'un élément de retenue pour la pièce à traiter, et dans lequel ledit élément de retenue est agencé, de manière ajustable en position, dans le sens d'un axe longitudinal du bras de support, par rapport au point central de la roue de liaison, et est aussi couplé avec une commande pour la détermination d'un positionnement par rapport au point central de la roue de liaison, **caractérisé en ce que** la commande détermine, au moins à certains moments, le positionnement de l'élément de retenue (51), indépendamment d'un positionnement en rotation temporaire de la roue de liaison (41).

2. Dispositif selon la revendication 1, **caractérisé en ce que** la commande est pneumatique, au moins sur une section.

3. Dispositif selon la revendication 1, **caractérisé en ce que** la commande est électrique, au moins sur une section.

4. Dispositif selon la revendication 1, **caractérisé en ce que** la commande est réalisée, au moins sur une section, sous la forme d'un galet de guidage (58), avec un segment en courbe positionnable.

5. Dispositif selon la revendication 1, **caractérisé en ce que** la commande est électromagnétique, au moins sur une section.

6. Dispositif selon l'une des revendications 1 à 5, **caractérisé en ce que** l'élément de retenue (51) est positionné dans une position de base par précontrainte d'un ressort et qu'une modification de ladite position de base peut être déterminée à l'aide de la commande.

7. Dispositif selon l'une des revendications 1 à 6, **caractérisée en ce que** l'élément de retenue (51) est maintenu par rapport au bras de support (50) par au moins un élément de guidage (59).

8. Dispositif selon la revendication 7, **caractérisé en ce que** deux éléments de guidage en forme de barres (59) sont utilisés.

9. Dispositif selon l'une des revendications 1 à 8, **caractérisé en ce que** tous les éléments de retenue (51) peuvent être essentiellement positionnés simultanément à l'aide de la commande.

10. Dispositif selon l'une des revendications 1 à 9, **caractérisé en ce que** les éléments de retenue (51) positionnent des pièces conçues en forme de conteneurs (2) avec zone de goulot vers le haut, en position d'aplomb.

11. Dispositif selon l'une des revendications 1 à 10, **caractérisé en ce que** les éléments de retenue (51) sont conçus forme de pinces.

12. Dispositif selon l'une des revendications 1 à 10, **caractérisé en ce que** les éléments de retenue (51) sont conçus sous la forme d'un profilé de retenue qui coopère avec au moins un élément de guidage (59) qui positionne les pièces à traiter dans ledit profilé de retenue.

13. Dispositif selon l'une des revendications 1 à 12, **caractérisé en ce que** la roue de liaison (41) est disposée en tant qu'élément de liaison entre un module de soufflage pour le formage de conteneurs et une machine de remplissage pour le remplissage des conteneurs.

14. Dispositif selon l'une des revendications 1 à 13, **caractérisé en ce que** les bras de support (50) sont disposés pivotants par rapport à un élément de base (54) de la roue de liaison (41).

15. Dispositif selon l'une des revendications 1 à 14, **caractérisé en ce que** les bras de support (50) peuvent être positionnés par une commande de guidage en en courbe par rapport à l'élément de base (54).

16. Dispositif selon l'une des revendications 1 à 15, **caractérisé en ce qu'**un dispositif de transport est disposé perpendiculairement, au-dessous de la roue de liaison (41), pour les pièces libérées.

17. Dispositif selon l'une des revendications 1 à 16, **caractérisé en ce que** la roue de liaison (41) est conçue pour le transport de pièces en forme conteneurs en matière thermoplastique.

18. Dispositif selon l'une des revendications 1 à 16, **caractérisé en ce que** la roue de liaison (41) est conçue pour le transport de pièces à traiter en forme de paraisons (1) pour le formage ultérieur de conteneurs selon la technique de soufflage.
